# FASCICULE DE BREVET EUROPEEN

(11) **EP 2 046 636 B1**
(45) Date de publication et mention de la délivrance du brevet: **21.07.2010**
(21) Numéro de dépôt: 07823651.0
(22) Date de dépôt: 26.07.2007
(51) Int. Cl.: B64C 1/14

(54) **ENCADREMENT DE PORTE POUR AERONEF**
FLUGZEUGTÜR
AIRCRAFT DOORWAY

(30) Priorité: 01.08.2006 FR 0653233
(43) Date de publication de la demande: 15.04.2009
(73) Titulaire: AIRBUS OPERATIONS (S.A.S), 31060 Toulouse (FR)
(72) Inventeur: LARCHER, David, 31470 Fontenilles (FR)
(74) Mandataire: Lebrette, Camille
(86) Numéro de dépôt international: PCT/FR2007/051735
(87) Numéro de publication internationale: WO 2008/015360

(56) Documents cités:
- EP-A- 1 607 272
- EP-A1- 0 346 210
- WO-A-03/104080
- US-B1- 6 488 235

## Description

### Domaine de l'invention

L'invention concerne un encadrement de porte d'aéronef réalisé en matériau composite assurant à la fois l'absorption de l'énergie provenant d'un choc pour assurer le bon fonctionnement de la porte, et également l'utilisation optimisée des composites tant au niveau performances mécaniques qu'au niveau industriel.

L'invention trouve des applications dans le domaine de l'aéronautique et, en particulier, dans le domaine de la structure des encadrements de portes.

### Etat de la technique

L'état de la technique est illustré par les documents WO-A-03104080 et EP-A-0346210.

Actuellement, dans les aéronefs et en particulier les aéronefs de transport de passagers, on cherche à assurer au mieux la sécurité des personnes à bord et notamment des passagers.

Pour assurer la sécurité des passagers en cas de crash, une évacuation rapide des passagers est primordiale. Pour cela, les constructeurs d'aéronefs cherchent à sécuriser les portes d'aéronefs, c'est-à-dire à protéger les portes pour éviter toute détérioration et déformation des portes en cas de choc afin d'assurer leur bon fonctionnement. En effet, si la porte est endommagée, en particulier lors d'un crash, les passagers de l'aéronef ne peuvent sortir du fuselage ou ne peuvent en sortir que difficilement. Si la porte d'accès au fuselage ne peut s'ouvrir, il faut attendre l'intervention des forces spécialisées de secours au sol pour démolir la porte afin de pénétrer dans le compartiment passagers de l'aéronef et porter secours aux passagers, ce qui peut prendre un temps relativement long. Or, il a été montré qu'un avion peut prendre feu rapidement, de l'ordre de quelques minutes, après un crash. Au contraire, si la porte est protégée et qu'elle peut fonctionner et être ouverte par les personnes à bord de l'aéronef sans attendre nécessairement l'arrivée des forces spécialisées, alors les passagers indemnes peuvent sortir de l'aéronef rapidement et les secours peuvent entrer pour aider les victimes le plus rapidement possible.

Dans un aéronef, il peut y avoir plusieurs portes de sortie, à savoir :
- une ou plusieurs porte(s) passagers à l'avant du fuselage de l'aéronef,
- une ou plusieurs porte(s) passagers à l'arrière du fuselage,
- une ou plusieurs porte(s) au centre du fuselage, dans la cabine passagers, et
- une ou plusieurs porte(s) d'accès aux soutes, sous le fuselage de l'aéronef.

Dans les aéronefs actuels, chaque porte est montée sur une structure métallique installée dans le fuselage de l'aéronef. Cette structure métallique comporte des cadres et un ensemble de raidisseurs qui forment ensemble un encadrement de porte. La porte est donc montée sur une armature métallique, par exemple une armature en aluminium. En effet, l'aluminium a l'avantage d'être un métal résistant, simple à mettre en forme et apte à se déformer sous l'effet d'un choc pour absorber l'énergie provenant du choc.

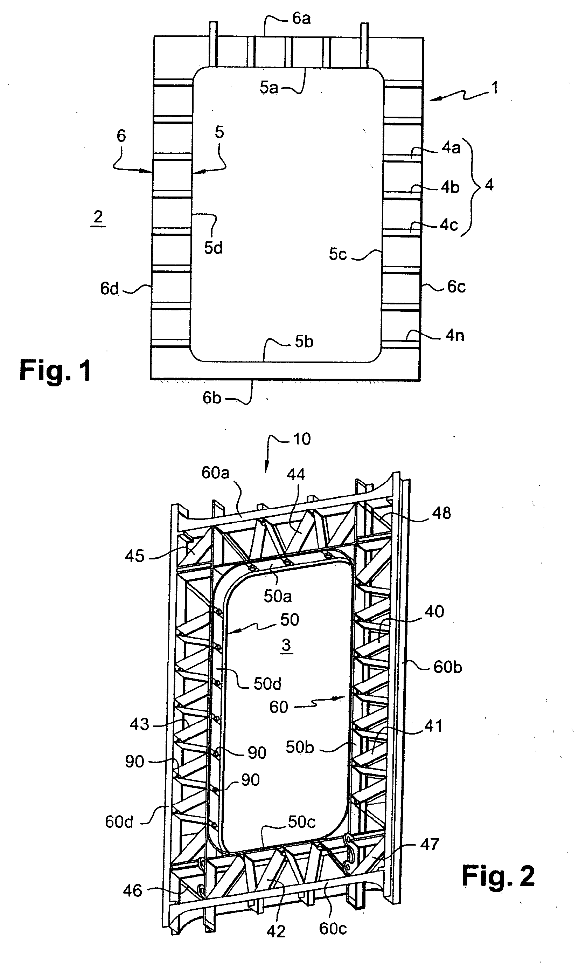

Un exemple d'encadrement de porte classique est représenté sur la figure 1. Cet encadrement de porte 1 est installé dans un fuselage 2 d'aéronef pour supporter une porte non représentée sur la figure 1 et destinée à être montée dans l'espace vide 3 de l'encadrement 1. Cet encadrement de porte 1 comporte une armature réalisée au moyen d'un cadre interne 5, d'un cadre externe 6 et d'une âme 4 placée entre le cadre interne 5 et le cadre externe 6. Le cadre interne 5 est destiné à recevoir des moyens de fixation de la porte. Le cadre externe 6 constitue la liaison entre l'encadrement de porte 1 et le fuselage 2. L'âme 4 a pour rôle d'absorber l'énergie provenant d'un choc. L'âme 4 relie le cadre interne 5 et le cadre externe 6.

Chaque cadre 5 et 6 de l'encadrement de porte 1 comporte deux traverses horizontales, respectivement 5a, 5b et 6a, 6b, et deux montants verticaux, respectivement 5c, 5d et 6c, 6d. L'ensemble formé d'une traverse haute 5a et d'une traverse basse 5b, d'un montant droit 5c et d'un montant gauche 5d, assemblés les uns avec les autres, constitue un cadre 5.

Classiquement l'âme 4, entre le cadre interne 5 et le cadre externe 6, est réalisée au moyen d'une pluralité de raidisseurs 4a, 4b, 4c,...4n, appelés ferrures intercostales. Ces ferrures intercostales sont des éléments indépendants et, plus précisément, des raidisseurs horizontaux entre les montants de l'encadrement de porte et des raidisseurs verticaux entre les traverses de l'encadrement de porte. Ces ferrures intercostales sont fixées de part et d'autre, sur le cadre interne 5 et sur le cadre externe 6. Actuellement, l'armature métallique d'un encadrement de porte est optimisée de façon à ce que les ferrures intercostales se déforment lors d'un choc. En se déformant, les ferrures intercostales absorbent l'énergie du choc, protégeant ainsi la porte. Une telle armature métallique permet ainsi de respecter les normes de sécurité relatives aux portes d'aéronef.

Les constructeurs d'aéronefs cherchent à diminuer au maximum la masse de l'aéronef afin de gagner sur la consommation de l'appareil en carburant. Pour cela, un des moyens est de choisir des matériaux plus légers.

La tendance actuelle en aéronautique est de remplacer les éléments métalliques par des éléments en matériau composite. En effet, il est bien connu que les matériaux composites permettent de gagner sur la masse de l'appareil et donc de réduire sa consommation. Toutefois, dans le cas d'un encadrement de porte, il ne suffit pas de remplacer l'aluminium par un matériau composite. En effet, le remplacement des ferrures intercostales en aluminium par des ferrures intercostales en matériau composite poserait un problème d'absorption d'énergie, car les matériaux composites ont une faible capacité d'absorption d'énergie. Un matériau composite soumis à une forte pression ne se déforme pas. Il se casse. L'effort, dans un encadrement de porte tel qu'il vient d'être décrit mais avec des ferrures intercostales en matériau composite serait, en cas de crash, entièrement transféré à la porte avec des risques de déformation qui pourrait empêcher son fonctionnement ultérieur. L'énergie provenant du choc ne serait donc pas absorbée par l'encadrement de porte, ce qui entrainerait une détérioration de la porte.

De plus, l'architecture classique fait travailler les raidisseurs en cisaillement au niveau de la semelle de ceux-ci, ce qui est le point faible des matériaux composites.

En outre, la réalisation de ferrures intercostales en matériau composite pour réaliser un encadrement de porte tel que celui décrit précédemment serait relativement coûteuse d'un point de vue production. En effet, la fabrication d'un nombre élevé de ferrures intercostales et la fixation de chaque ferrure entre les cadres interne et externe entraînerait une augmentation des coûts de production trop importants ainsi que des cycles de fabrication trop élevés par rapport aux exigences actuelles.

### Exposé de l'invention

L'invention a justement pour but de résoudre les inconvénients de la technique exposée précédemment. A cette fin, l'invention propose un encadrement de porte dans lequel l'âme de l'armature est réalisée en matériau composite, avec une forme continue apte à absorber l'énergie d'un choc, avec un nombre de pièces réduit pour assurer une production à un coût intéressant, et avec un drainage préférentiel des efforts en traction/compression pour des performances mécaniques optimisées pour les composites. Pour cela, l'âme de l'armature a une forme en accordéon.

De façon plus précise, l'invention concerne un encadrement de porte pour fuselage d'aéronef comportant une armature de porte à l'intérieur de laquelle est montée une porte, cette armature comprenant :
- un cadre externe,
- un cadre interne, et
- une âme placée entre le cadre interne et le cadre externe, apte à absorber une énergie provenant d'un choc, caractérisé en ce que l'âme est un raidisseur en matériau composite ayant une forme en accordéon comprenant une succession de soufflets en forme de V et de V inversés.

L'invention peut comporter une ou plusieurs des caractéristiques suivantes :
- chaque soufflet du raidisseur en accordéon a un sommet arrondi.
- le raidisseur en accordéon est réalisé en une seule pièce
- la pièce formant le raidisseur en accordéon comporte quatre cotés en accordéon reliés par des angles en forme de créneau.
- le raidisseur en accordéon comporte au moins deux éléments de raidisseur indépendants placés bout à bout, entre les cadres interne et externe.
- le raidisseur en accordéon comporte deux éléments de raidisseurs verticaux et deux éléments de raidisseur horizontaux.
- le raidisseur est fixé sur le cadre externe et/ou le cadre interne par les sommets de ses soufflets.
- le matériau composite dans lequel est réalisé le raidisseur en accordéon comporte des fibres de carbone.
- le matériau composite dans lequel est réalisé le raidisseur en accordéon comporte des fibres de kevlar.
- le raidisseur en accordéon est réalisé avec un procédé RTM.

L'invention concerne également un fuselage d'aéronef équipé d'encadrement de porte tel que décrit précédemment.

L'invention concerne aussi un aéronef comportant un encadrement de porte tel que décrit précédemment.

### Brève description des dessins

La figure 1, déjà décrite, représente un encadrement de porte classique en aluminium.
La figure 2 représente un encadrement de porte selon l'invention.
La figure 3 représente une âme en matériau composite dans un encadrement de porte selon l'invention.
La figure 4 représente un encadrement de porte selon la figure 2 tel que monté sur un fuselage d'aéronef.
La figure 5 représente schématiquement le mode de transmission des efforts dans le raidisseur
Les figures 6A et 6B représentent la manière dont le raidisseur absorbe l'énergie en cas de choc.

### Description détaillée de modes de réalisation de l'invention

Sur la figure 2, on a représenté un exemple d'encadrement de porte pour fuselage d'aéronef selon l'invention. L'encadrement de porte représenté sur la figure 2 est un encadrement de porte d'une cabine passagers. Il est à noter, toutefois, que toutes les portes permettant la sortie des personnes, passagers ou équipage, d'un aéronef peuvent être réalisées avec l'encadrement de l'invention. Cet encadrement de porte 10 comporte une armature formée d'un cadre externe 60 et d'un cadre interne 50. Ces cadres interne et externe peuvent être identiques à ceux de l'art antérieur, c'est-à-dire qu'ils sont métalliques, par exemple en aluminium. Ils peuvent être aussi dans tout autre matériau utilisé habituellement pou des armatures de porte d'aéronef.

Cette armature comporte également une âme 40 située entre le cadre interne 50 et le cadre externe 60. Selon l'invention, cette âme 40 est un raidisseur réalisé en matériau composite. Ce raidisseur 40 a une forme en accordéon. On appelle « forme en accordéon » une forme en dents de scie comportant une succession de soufflets en V et en V inversé, formés les uns à la suite des autres. Ce raidisseur en accordéon 40 est installé sur tout le pourtour de l'armature, c'est-à-dire sur la totalité de l'espace situé entre le cadre interne 50 et le cadre externe 60.

Comme on le voit dans l'exemple de la figure 2, les cadres interne et externe sont sensiblement rectangulaires. Le cadre interne 50 peut avoir des angles arrondis pour assurer une meilleure adaptation à la forme de la porte dans l'ouverture 3 de l'encadrement de porte 10.

Le raidisseur en accordéon 40 peut être fabriqué d'une seule pièce et monté d'un seul tenant autour du cadre interne 50, le cadre externe 60 venant se fixer ensuite autour du raidisseur en accordéon. Le raidisseur en accordéon est ensuite fixé sur les cadres interne et externe au moyen de fixations composites classiques qui prennent le raidisseur en sandwich entre les cadres et une bride qui vient se loger dans l'arrondi du V de manière à transférer les efforts de manière homogène. Dans ce cas, le raidisseur comporte quatre cotés en dents de scie. A chaque angle entre deux cotés en dents de scie, le raidisseur a une forme en créneau 45, 46, 47, 48, c'est-à-dire une forme en carré ouvert, l'ouverture faisant face à un angle du cadre interne 50. Autrement dit, les cotés du raidisseur en accordéon sont reliés les uns aux autres par des angles en forme de créneau.

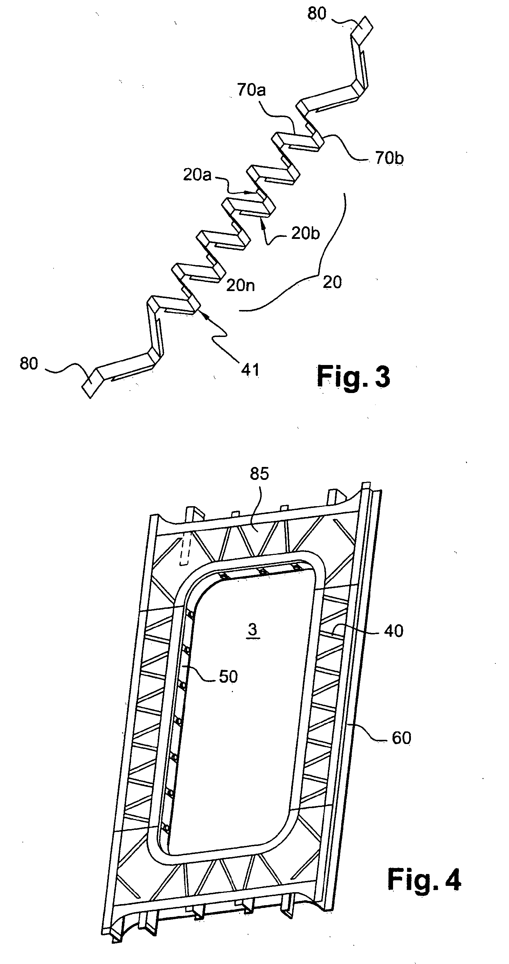

Dans un autre mode de réalisation de l'invention, le raidisseur en accordéon comporte plusieurs éléments indépendants placés bout à bout, entre les cadres interne et externe. Le raidisseur en accordéon peut comporter, par exemple, quatre éléments de raidisseur, à savoir deux éléments courts 42 et 44 placés horizontalement entre les deux traverses 50a, 60a et 50c, 60c des cadres interne et externe, et deux éléments longs 41, 43 placés verticalement entre les montants 50b, 60b et 50d, 60d des cadres interne et externe. Dans ce mode de réalisation, chaque élément de raidisseur est indépendant, fabriqué de façon indépendante. Dans les zones où le fuselage possède une section constante, les deux éléments de raidisseur horizontaux sont identiques et les deux éléments de raidisseur verticaux sont identiques. Chaque élément de raidisseur a la forme de l'élément de raidisseur représenté sur la figure 3, avec une longueur adaptée à la longueur des cadres.

Dans l'exemple de la figure 3, l'élément représenté est l'élément de raidisseur vertical 41.

Chaque élément de raidisseur comporte une succession de soufflets en forme de V 70a et en forme de V inversé 70b. Les soufflets situés aux deux extrémités de l'élément de raidisseur a une forme de V plus large pour assurer l'insertion de l'élément dans l'angle des cadres interne et externe. Cet élément de raidisseur peut se terminer de part et d'autre par une patte plate 80 destinée à venir en appui contre un des montants ou une des traverses du cadre interne pour y être éventuellement fixée. Le raidisseur contient éventuellement des pattes 20a, 20b...20n permettant de relier la structure à la peau du fuselage de manière à reprendre les efforts de pressurisation.

Comme montré sur la figure 2, le raidisseur en accordéon 40, qu'il soit réalisé d'une seule pièce ou en plusieurs éléments, peut être fixé sur les cadres interne et externe par un ou plusieurs éléments de fixation. De préférence, il est fixé au niveau de la pointe de chaque soufflet en V ou en V inversé, comme représenté par la référence 90 sur la figure 2. Les éléments de fixation peuvent être des rivets ou tout autre moyen de fixation utilisé généralement pour fixer des éléments en matériau composite.

Comme on le verra plus en détail par la suite, les soufflets 70a, 70b du raidisseur en accordéon ont, de préférence, leurs sommets arrondis afin d'améliorer l'absorption de l'énergie du choc en drainant les efforts. Ces sommets arrondis permettent également de fixer plus aisément le raidisseur entre les deux cadres.

Sur la figure 4, on a représenté l'encadrement de porte de la figure 2 lorsqu'il est recouvert par la peau externe 85 du fuselage. La figure 4 montre donc l'encadrement de porte de l'invention, vu de l'extérieur de l'aéronef, lorsque la porte n'est pas encore montée dans l'espace 3. On

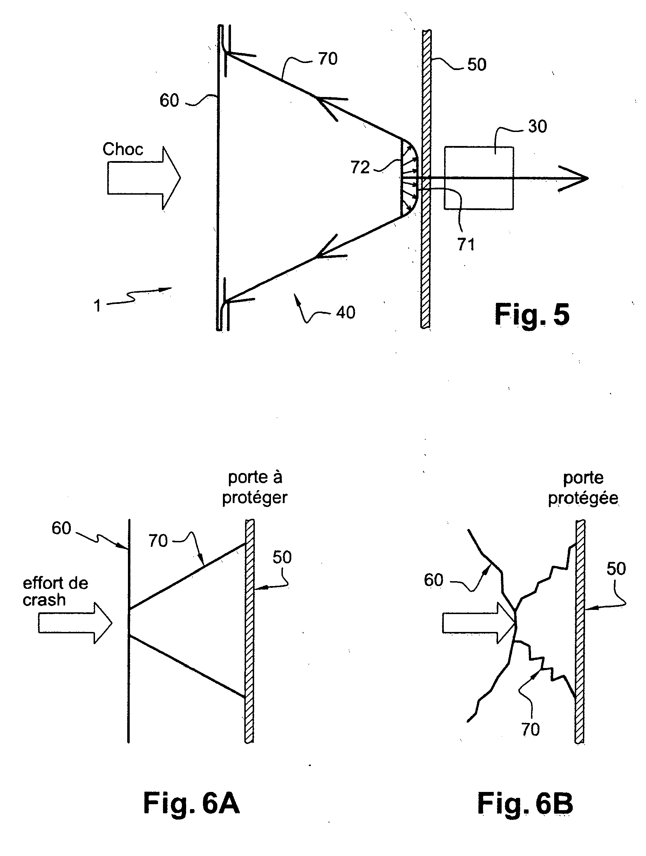

Sur la figure 5, on a représenté schématiquement le drainage des efforts en fonctionnement normal. Pour cela, la figure 5 montre une section d'un encadrement de porte selon l'invention avec son cadre externe 60, son cadre interne 50 et un soufflet 70 du raidisseur en accordéon 40. Ce soufflet 70 a un sommet 71 arrondi qui permet d'augmenter le contact entre le raidisseur et le cadre interne 50. Ce soufflet 70 est pris en sandwich entre une bride 72 et le cadre interne 50, Cela permet de transférer les efforts de manière progressive et homogène entre les cadres et le raidisseur. Avec des surfaces de contact ainsi arrondies, le raidisseur en accordéon ne comporte aucun angle vif qui pourrait donner naissance à du cisaillement. Cet arrondi permet de convertir les efforts intégralement en efforts de traction dans le raidisseur qui est bien plus favorable aux matériaux composites.

Sur les figures 6A et 6B, on montre la manière dont le raidisseur absorbe l'énergie liée à un choc. Le choc induit des efforts très importants qui vont être drainés par la structure jusqu'à l'encadrement de porte externe 60. Sous l'effet de ces efforts, le raidisseur va jouer le rôle de martyr en se déformant pour absorber l'énergie et protéger l'encadrement direct de la porte 50, permettant ainsi l'évacuation des passagers.

Pour cela le raidisseur va se détruire par délaminage progressif. Il place ainsi l'encadrement de porte direct 50 dans un berceau protecteur.

Le matériau composite dans lequel est réalisé le raidisseur en accordéon peut être formé à partir de fibres de carbone et de résine époxy. Il peut également être réalisé à partir de kevlar®. Ces deux types de matériau composite ont l'avantage d'être particulièrement résistants, ce qui permet la réalisation d'un encadrement de porte apte à supporter une porte chargée.

Le raidisseur en accordéon peut être réalisé par une technique d'injection sous vide, appelée procédé RTM (Resin Transfer Molding, en termes anglo-saxons). Ce procédé RTM consiste à découper la forme des éléments du raidisseur, ou du raidisseur en entier, dans un tissu de fibres sèches non enduites. Ce tissu peut être choisi et découpé de sorte que les fibres soient orientées dans le sens longitudinal du raidisseur afin de reprendre un maximum d'efforts. Ce tissu est placé dans un moule ; une résine est injectée sous haute pression dans ce moule. La résine a pour effet de s'insérer dans les interstices des fibres du tissu, polymérisant lesdites fibres en suivant les formes du moule, ce qui réalise la forme et la cohésion de l'élément recherche. La réalisation d'éléments ayant un profil ouvert, c'est-à-dire un rayon de courbure suffisamment grand par rapport à la surface totale de l'élément, comme le raidisseur en accordéon, est relativement simple avec un tel procédé RTM.

L'encadrement de porte à âme en matériau composite tel qu'il vient d'être décrit présente non seulement l'avantage de diminuer la masse totale de l'aéronef, mais également celui d'augmenter les performances d'absorption d'énergie grâce à sa géométrie spécifique. De plus, il permet de rendre plus homogènes les charges liées à la pressurisation de la cellule ce qui permet d'envisager de pouvoir coller la peau de l'avion sur l'encadrement de porte sans utiliser de fixations. De plus, l'utilisation de composites dans une sollicitation de traction permet de multiplier par 10 ses performances comparé à une utilisation en cisaillement. En outre, la réalisation d'un tel encadrement de porte nécessite un nombre de pièces sensiblement moindre qu'un encadrement de porte classique, ce qui diminue le temps d'assemblage de ces pièces et donc le coût de la main d'oeuvre.

## Revendications

1. Encadrement de porte (1) pour fuselage d'aéronef (2) comportant une armature de porte à l'intérieur de laquelle est montée une porte, cette armature comprenant :
- un cadre externe (60),
- un cadre interne (50), et
- une âme (40) placée entre le cadre interne et le cadre externe, apte à absorber une énergie provenant d'un choc,
**caractérisé en ce que** l'âme (40) est un raidisseur en matériau composite ayant une forme en accordéon comprenant une succession de soufflets (70) en forme de V (70a) et de V inversés (70b).

2. Encadrement de porte selon la revendication 1, **caractérisé en ce que** chaque soufflet (70) du raidisseur en accordéon a un sommet arrondi (71).

3. Encadrement de porte selon l'une quelconque des revendications 1 à 2, **caractérisé en ce que** le raidisseur en accordéon (40) est réalisé en une seule pièce.

4. Encadrement de porte selon la revendication 3, **caractérisé en ce que** le raidisseur en accordéon comporte quatre cotés en accordéon reliés par des angles en forme de créneau (45, 46, 47, 48)

5. Encadrement de porte selon l'une quelconque des revendications 1 à 2, **caractérisé en ce que** le raidisseur en accordéon (40) comporte au moins deux éléments de raidisseur indépendants placés bout à bout, entre les cadres interne et externe.

6. Encadrement de porte selon la revendication 5, **caractérisé en ce que** le raidisseur en accordéon comporte deux éléments de raidisseurs verticaux (41, 43) et deux éléments de raidisseur horizontaux (42, 44).

7. Encadrement de porte selon l'une quelconque des revendications 1 à 6, **caractérisé en ce que** le raidisseur est fixé sur le cadre externe et/ou le cadre interne par les sommets (71) de ses soufflets (70).

8. Encadrement de porte selon l'une quelconque des revendications 1 à 7, **caractérisé en ce que** le matériau composite comporte des fibres de carbone.

9. Fuselage d'aéronef, **caractérisé en ce qu'**il comporte au moins un encadrement de porte selon l'une quelconque des revendications 1 à 8.

10. Aéronef, **caractérisé en ce qu'**il comporte au moins un encadrement de porte selon l'une quelconque des revendications 1 à 8.

## Claims

1. A doorway (1) in an aircraft fuselage (2) comprising a door frame in which a door is mounted, this frame comprising:
- an outer framework (60),
- an inner framework (50), and
- a core (40) placed between the inner framework and the outer framework, capable of absorbing energy from an impact,
**characterised in that** the core (40) is a stiffener made out of composite material having an accordion shape including a succession of V-shaped (70a) and inverted V-shaped (70b) bellows (70).

2. A doorway according to claim 1, **characterised in that** each bellows (70) of the accordion-shaped stiffener has a rounded peak (71).

3. A doorway according to any one of claims 1 to 2, **characterised in that** the accordion-shaped stiffener (40) is made out of a single part.

4. A doorway according to claim 3, **characterised in that** the accordion-shaped stiffener comprises four accordion-shaped sides connected by wedge-shaped corners (45, 46, 47, 48).

5. A doorway according to any one of claims 1 to 2, **characterised in that** the accordion-shaped stiffener (40) comprises at least two independent stiffener components positioned end to end between the inner and outer frameworks.

6. A doorway according to claim 5, **characterised in that** the accordion-shaped stiffener comprises two vertical stiffener components (41, 43) and two horizontal stiffener components (42, 44).

7. A doorway according to any one of claims 1 to 6, **characterised in that** the stiffener is attached to the outer framework and/or the inner framework by the peaks (71) of the bellows (70).

8. A doorway according to any one of claims 1 to 7, **characterised in that** the composite material contains carbon fibres.

9. An aircraft fuselage, **characterised in that** it comprises at least one doorway according to any one of claims 1 to 8.

10. An aircraft, **characterised in that** it comprises at least one doorway according to any one of claims 1 to 8.

## Patentansprüche

1. Türrahmen (1) für den Rumpf eines Luftfahrzeugs (2) mit einer Türarmatur, in die eine Türe eingebaut ist, wobei diese Armatur folgendes enthält:
- einen äußeren Rahmen (60),
- einen inneren Rahmen (50), und
- eine Füllung (40), die zwischen dem inneren Rahmen und dem äußeren Rahmen angebracht ist, und die in der Lage ist, die Energie eines Aufpralls zu absorbieren,
**dadurch gekennzeichnet, dass** die Füllung (40) eine Versteifung aus einem Verbundmaterial ist, die die Form einer Ziehharmonika aufweist, mit einer Reihe aufeinanderfolgender Bälge (70) in Form eines V (70a) oder umgekehrter V (70b).

2. Türrahmen nach Anspruch 1, **dadurch gekennzeichnet, dass** jeder Balg (70) der ziehharmonikaförmigen Versteifung einen abgerundeten Scheitel (71) aufweist.

3. Türrahmen nach irgendeinem der Ansprüche 1 bis 2, **dadurch gekennzeichnet, dass** die ziehharmonikaförmige Versteifung (40) aus einem Teil gefertigt ist.

4. Türrahmen nach Anspruch 3, **dadurch gekennzeichnet, dass** die ziehharmonikaförmigen Versteifung vier ziehharmonikaförmig gefaltete Seiten aufweist, die durch zackige Winkel (45, 46, 47, 48) miteinander verbunden sind.

5. Türrahmen nach irgendeinem der Ansprüche 1 bis 2, **dadurch gekennzeichnet, dass** die ziehharmonikaförmigen Versteifung (40) zumindest zwei unabhängige Versteifungselemente enthält, die zwischen dem inneren und dem äußeren Rahmen aneinandergefügt sind.

6. Türrahmen nach Anspruch 5, **dadurch gekennzeichnet, dass** die ziehharmonikaförmigen Versteifung zwei vertikale Versteifungselemente (41, 43) und zwei horizontale Versteifungselemente (42, 44) enthält.

7. Türrahmen nach irgendeinem der Ansprüche 1 bis 6, **dadurch gekennzeichnet, dass** die Versteifung durch die Scheitel (71) ihrer Bälge (70) am äußeren und/ oder inneren Rahmen befestigt ist.

8. Türrahmen nach irgendeinem der Ansprüche 1 bis 7, **dadurch gekennzeichnet, dass** das Verbundmaterial Carbonfasern enthält.

9. Rumpf eines Luftfahrzeugs, **dadurch gekennzeichnet, dass** er zumindest einen Türrahmen nach irgendeinem der Ansprüche 1 bis 8 enthält.

10. Luftfahrzeug, **dadurch gekennzeichnet, dass** es zumindest einen Türrahmen nach irgendeinem der Ansprüche 1 bis 8 enthält.
